# EUROPEAN PATENT APPLICATION

(11) **EP 4 046 910 A1**
(43) Date of publication of application: **24.08.2022**
(21) Application number: 21382144.0
(22) Date of filing: 23.02.2021
(51) Int. Cl.: B64C 33/02, B64B 1/00

(54) **BUOYANT WING FLYING DEVICE**

(71) Applicant: Schaller Perez, Serge, 17190 Girona (ES)
(72) Inventor: Schaller Perez, Serge, 17190 Girona (ES)
(74) Representative: Isern Patentes y Marcas S.L.

(57) **Abstract**

A flying device (1), comprising at least one wing profile (2) enabled for a generation of a pressure differential with the passage of the air and a consequent lifting thrust in the same wing profile, wherein at least one wing profile (2) has a hollow arrangement therein and is filled with a fluid that is lighter than the air.

## Description

### OBJECT OF THE INVENTION

The object of the present invention application is to register a flying device, which incorporates notable innovations and advantages over the techniques used up until now.

More specifically, the invention proposes the development of a flying device, which, due to the particular arrangement thereof, enables the flight and lift performance in the flying apparatuses with wings known in the state of the art to be improved in a very advantageous manner.

### BACKGROUND OF THE INVENTION

In the current state of the art, a multitude of flight apparatuses with wings are known, especially those for flight without a motor, and which have a user who steers and pilots the apparatus itself.

Despite the good performance known in these devices, the flight and lift capabilities thereof are susceptible to being improved, especially in the interest of the safety of the users and the aerobatic possibilities and performance thereof.

The present invention contributes to solving the present problem, since it enables the flight and lift performance in the flying apparatuses with wings known in the state of the art to be improved in a very advantageous manner.

### DESCRIPTION OF THE INVENTION

The present invention has been developed in order to provide a flying device, which comprises at least one wing profile enabled for a generation of a pressure differential with the passage of the air and a consequent lifting thrust in the wing profile itself, wherein at least one wing profile has a hollow arrangement therein and is filled with a fluid that is lighter than the air.

Preferably, in the flying device the fluid inside the wing profile is helium.

Additionally, the flying device is equipped with mobile elements enabled for the interaction thereof with the passage of the air and intervene in the lift thereof itself.

Additionally, the flying device is enabled to carry at least one user.

Preferably, the flying device comprises control mechanisms linked to the mobile elements, enabled to be steered by the user and for the movement of the mobile elements.

Alternatively, the flying device comprises radio receiver means linked to the mobile elements, enabled to receive instructions by radio and for the movement of the mobile elements according to said instructions.

Alternatively, in the flying device, the mobile elements have an arrangement in the form of ailerons or rudders.

Alternatively, in the flying device, the mobile elements have an arrangement in the form of bird wings and are further enabled to perform an oscillatory movement up and down similar to that known and performed by the bird wings.

Alternatively, in the flying device, mobile elements have an arrangement in the form of ailerons or rudders and other mobile elements have an arrangement in the form of bird wings enabled to perform an oscillatory movement up and down similar to the one known and performed by the bird wings.

Alternatively, in the flying device, the mobile elements in the form of bird wings have a suitable geometry in order to suitably interact with the passage of air, and as a consequence of said passage of air, create an ascending pressure differential in the same mobile element.

Alternatively, in the flying device, the mobile elements having an arrangement in the form of bird wings are enabled so that an inner portion thereof opens and folds in relation to the rest of the mobile element.

Alternatively, the flying device incorporates at least one flight motor.

Alternatively, the flying device has an arrangement in the form of an airplane.

Thanks to the present invention, the flight and lift performance in the flight apparatuses with wings known in the state of the art is able to be improved in a very advantageous manner.

Other features and advantages of the flying device will become apparent from the description of a preferred but not exclusive embodiment, illustrated by way of non-limiting example in the attached drawings, wherein:

### BRIEF DESCRIPTION OF THE DRAWINGS

Figures 1 and 2 are schematic views from different perspectives of a preferred embodiment of the flying device of the present invention.
Figure 3 is a schematic view indicating a movement of mobile elements in the form of ailerons or rudders, in a preferred embodiment of the flying device of the present invention.
Figures 4, 5 and 6 are schematic views indicating movements in mobile elements in the form of bird wings, in a preferred embodiment of the flying device of the present invention.

Figures 7 and 8 are schematic views indicating possible performance in mobile elements in the form of bird wings, in a preferred embodiment of the flying device of the present invention.

### DESCRIPTION OF A PREFERRED EMBODIMENT

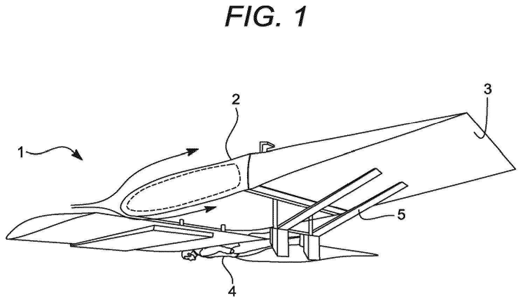

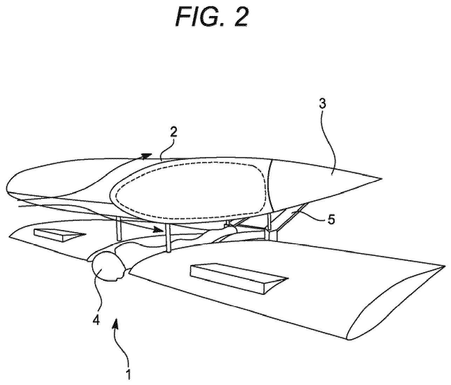

As shown schematically in Figures 1 and 2, in this preferred embodiment represented, the flying device 1 of the proposed invention has an arrangement and is particularly enabled for gliding and flight without a motor.

To do so, the flying device 1 of the proposed invention comprises at least one wing profile 2.

Said wing profile 2 is enabled for a generation of a lift in the flying device 1 of the proposed invention, as a consequence of the interaction thereof with the passage of the air represented schematically by the arrows in figures 1 and 2 through the flying device 1 itself of the same invention.

To this end, the wing profile 2 itself has a suitable geometry in order to suitably interact with the aforementioned passage of air represented by the arrows in figures 1 and 2, such that as a consequence of said passage of air, an ascending pressure differential is created in the same wing profile 2.

As a result of said pressure differential in the wing profile 2, a first vertical lifting thrust is generated in the wing profile 2 itself, which is what provides the flying device 1 of the invention with flight properties.

This explained lift property of the wing profile 2, and the consequent flight performance in the flying device 1 of the proposed invention are known in the state of the art.

However, and already in accordance with the invention itself, the flying device 1 of the proposed invention has very improved flight and lift performance in relation to the known state of the art and which has been referred to above.

To this end, the wing profile 2 referred to above has a hollow arrangement therein, and is schematically indicated in dotted line in figures 1 and 2, and which is filled with a fluid that is lighter than the ambient air. In this preferred embodiment, the wing profile 2 is filled with helium gas.

Since the helium gas is lighter than ambient air, a second vertical lifting thrust is generated in the same wing profile 2 containing the helium gas, and is additional to the first vertical lifting thrust already known in the state of the art and referred to initially.

Said second vertical lifting thrust generated by the presence of helium gas in the hollow interior of the wing profile 2 is the one which improves the flight and lift performance in the flying device 1 of the proposed invention, by significantly improving the resulting vertical lifting thrust compared to the one obtained in the known state of the art.

In addition to everything explained above, the flying device 1 of the proposed invention is equipped with mobile elements 3. Such mobile elements 3, such as ailerons or rudders, are enabled for the interaction thereof with the passage of the air which intervenes in the same flying device 1 of the invention during the flight thereof, and thus in turn intervene in the flight and lift thereof.

Moreover, in this preferred embodiment represented, the flying device of the invention is enabled to carry a user 4 during the same flight thereof. Also in accordance with this, the flying device 1 of the invention also comprises control mechanisms 5 linked to said mobile elements 3.

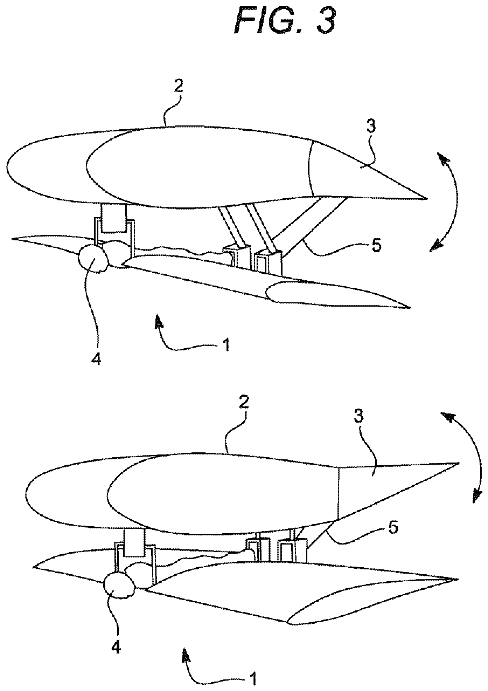

The control mechanisms 5, for example of a type already known in the state of the art, are enabled to be steered by the user 4, for example by means of their feet as schematically represented in figures 1 and 2. With this, the mobile elements 3, such as ailerons or rudders, can be properly moved and steered, as represented by the arrows and seen comparatively in figure 3, and the same user 4 can therefore pilot and manoeuvre to this end the same flying device 1 of the same invention.

With the flying device 1 of the invention described in this preferred embodiment, it is possible to carry out a planned free flight without a motor similar to those already known in the state of the art, but in a more effective and advantageous manner since it has a greater resulting ascending thrust, consequence of the explained use of a fluid that is less dense and therefore lighter than the air, in this case helium gas.

In other preferred embodiments, the flying device 1 of the proposed invention may incorporate radio receiver means (not represented in the drawings). Said radio receiver means are linked to the mobile elements 3, and can execute the movement and steering thereof.

This latter arrangement referred to therefore enables the radio receiver means to be able to receive instructions by radio, and according to them, suitably move and steer the mobile elements 3. With this, it is therefore possible to pilot and manoeuvre the flying device 1 of the invention by remote control, without needing it to be manned.

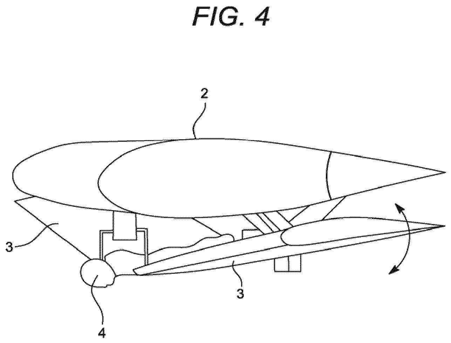

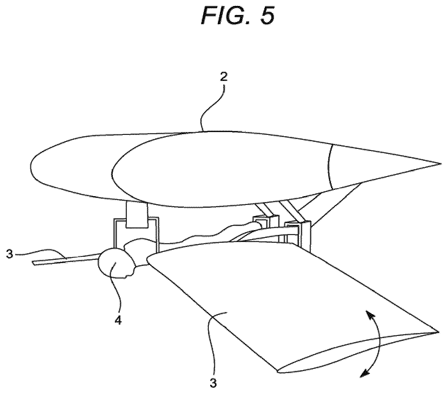

In other preferred embodiments, for example, schematically represented in figures 4 and 5, the mobile elements 3 may also have an arrangement in the form of bird wings and be further enabled to perform an oscillatory movement up and down similar to the one known and performed by bird wings, as represented by the arrows and seen by sequentially observing said figures 4 and 5.

Said mobile elements 3 in the form of bird wings may also have, as well as the wing profile 2 itself, a suitable geometry in order to suitably interact with the passage of air, and as a consequence of said passage of air, create an ascending pressure differential in the same mobile element 3.

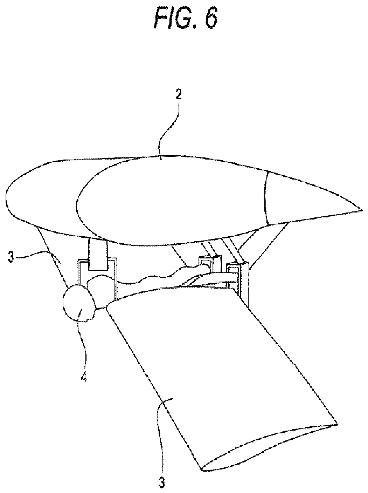

The aforementioned mobile elements 3 in the form of bird wings, are also enabled to be actuated and directed in the movement thereof by the user 4 of the flying device of the proposed invention, by means of control mechanisms, for example of a type already known in the state of the art. With this, the flight performance of the flying device of the invention can be further improved, with a multiplicity of possible movements in the mobile elements 3 in the form of wings, for example, as seen in figure 6.

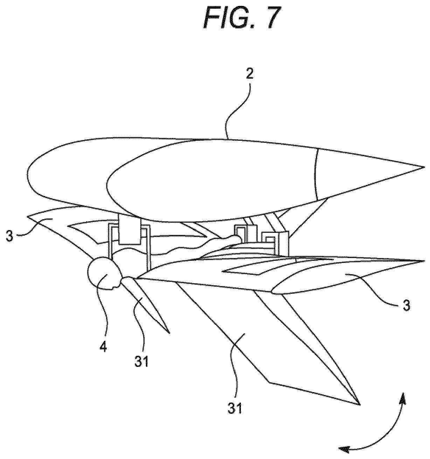

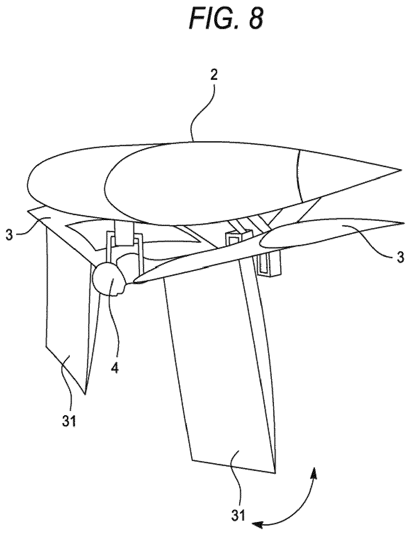

As shown schematically in Figures 7 and 8, the mobile elements 3 having an arrangement in the form of bird wings can be enabled so that an inner portion 31 thereof opens and folds in a direction opposite to the movement of the flying device 1 of the invention itself, as seen by the arrows of figures 7 and 8, and thus achieve a flapping effect of the wings in order to improve the ascending performance in the flight of the flying device 1 of the invention.

In other preferred embodiments, the flying device of the proposed invention can even incorporate a flight or propulsion motor (not represented in the drawings), in order to thus improve the flight performance thereof and have its own drive, and even an arrangement in the form of an airplane.

The details, shapes, dimensions and other secondary elements, as well as the materials used in manufacturing the flying device of the invention, may be suitably replaced with others that are technically equivalent and do not depart from the essential nature of the invention or from the scope defined by the claims included below.

## Claims

1. A flying device, comprising at least one wing profile (2) enabled for a generation of a pressure differential with the passage of the air and a consequent lifting thrust in the same wing profile (2), **characterised in that** at least one wing profile (2) has a hollow arrangement therein and is filled with a fluid that is lighter than the air.

2. The flying device according to claim 1, wherein the fluid inside the wing profile (2) is helium.

3. The flying device according to any of the preceding claims, which is equipped with mobile elements (3) enabled for the interaction thereof with the passage of the air and intervene in the lift thereof itself.

4. The flying device according to any of the preceding claims, which is enabled to carry at least one user (4).

5. The flying device according to claim 4 when it depends on claim 3, **characterised in that** it comprises control mechanisms (5) linked to the mobile elements (3), enabled to be steered by the user (4) and for the movement of the mobile elements (3).

6. The flying device according to claim 3, comprising radio receiver means linked to the mobile elements (3), enabled to receive instructions by radio and for the movement of the mobile elements (3) according to said instructions.

7. The flying device according to claim 3 or 5 or 6, wherein the mobile elements (3) have an arrangement in the form of ailerons or rudders.

8. The flying device according to claim 3 or 5 or 6, wherein the mobile elements (3) have an arrangement in the form of bird wings and are further enabled to perform an oscillatory movement up and down similar to the one known and performed by the bird wings.

9. The flying device according to claim 3 or 5 or 6, wherein mobile elements (3) have an arrangement in the form of ailerons or rudders and other mobile elements (3) have an arrangement in the form of bird wings enabled to perform an oscillatory movement up and down similar to the one known and performed by the bird wings.

10. The flying device according to claim 8 or 9, wherein the mobile elements (3) in the form of bird wings have a suitable geometry in order to suitably interact with the passage of air, and as a consequence of said passage of air, create an ascending pressure differential in the same mobile element (3).

11. The flying device according to claim 8 or 9 or 10, wherein the mobile elements (3) having an arrangement in the form of bird wings are enabled so that an inner portion (31) thereof opens and folds in relation to the rest of the mobile element (3).

12. The flying device according to any of the preceding claims, incorporating at least one flight motor.

13. The flying device according to claim 12, having an arrangement in the form of an airplane.
